# EUROPEAN PATENT APPLICATION

(11) **EP 1 229 529 A2**
(43) Date of publication of application: **07.08.2002**
(21) Application number: 02250376.7
(22) Date of filing: 21.01.2002
(51) Int. Cl.: G11B 7/24, G11B 7/26

(54) **Method for creating durable printed CD's using clear hot stamp coating**

(30) Priority: 30.01.2001 US 774426
(71) Applicant: Hewlett-Packard Company, Palo Alto, CA 94304 (US)
(72) Inventor: Kwasny, David M., Corvallis, OR 97333 (US); Kasperchik, Vladek P., Corvallis, OR 97330 (US); Stephens, Ronald D. Jr., San Diego, CA 92127 (US); Stark, Thomas J., Ramona, CA 92065 (US)
(74) Representative: Jackson, Richard Eric

(57) **Abstract**

Clear hot stamp coating methods of creating durable protective coatings (20) to the printed side of CD's (12).

## Description

### BACKGROUND OF THE INVENTION

Label images on digitally readable discs can be printed using water-based inks. Further, production of digitally readable discs is increasingly custom or short run requiring digital printing methods such as thermal or piezoelectric injet to economically produce labels. Protecting these digitally readable disc label images against abrasion, water, alcohol, other liquid spills, ink smear, fading, blocking or other image-degradation processes and effects has become an important consideration. Such protection is particularly desirable for digitally readable disc label images produced with water-based (water-soluble) or other liquid inks, as well as documents printed or imaged with toner. These are commonly used in ink-jet printing, offset printing, electrophotography and the like.

Hot and cold laminates are the most common methods used to protect images. However, laminates tend to be expensive, typically costing 6 to 80 cents per square foot for materials. The labor-intensive nature of producing durable prints via lamination also increases the cost of such prints. Laminates may be applied on one or both surfaces of the print. One-sided lamination may lead to excessive curling of the final print, whereas two-sided application can be very expensive in terms of material and labor costs and may excessively increase the thickness of the final print. Adhesives used for cold laminates may be tacky at room temperature, leaving a sticky residue at the edges of the discs. Additionally, binders used in creating cold laminates are typically water-based, which means the disc may delaminate if exposed to excessive water or other liquid.

Liquid overcoats are also commonly used to protect photographic prints and are becoming more popular as protective coatings for inkjet images. Typical systems for applying these overcoats rely on roller coating or gravure type systems to dispense, gauge, and apply the coating. Smaller systems typically apply the overcoat off-line, rather than being an integral part of a single printing and coating unit. Larger systems used by the printing industry are in-line, but require extensive monitoring. Both systems require significant manual cleaning or intervention to maintain the components that contact the liquid.

These liquid overcoats tend to be slightly less expensive than laminates (6-18 cents per square foot). However, because currently available systems must be cleaned frequently and regularly monitored, these methods of using liquid overcoats are just as labor-intensive as the lamination methods, if not more labor-intensive. Additionally, many of the overcoat formulations have residual odors before and/or after application, and some people find these odors offensive or even harmful.

Ultraviolet (UV) light curable liquid overcoats are also available, such as the overcoats commonly used to protect magazine covers. In such a UV-curable system, the liquid is first applied to the surface of the print and then cured to yield a solid, durable, protective coating. Because these liquids are widely used in large volumes for the magazine industry, their cost tends to be significantly lower than most other overcoat options. However, the systems used to apply such UV-curable overcoats tend to be more complicated and costly than other liquid overcoat systems, due to the multi-step application and cure process. Additionally, many of the overcoat formulations have strong odors, some of which are harmful or offensive to people. Furthermore, there are potential safety problems associated with the handling of the potentially hazardous liquids used in this process.
Malhotra (U.S. Patent No. 5,612,777 assigned to Xerox), Tutt & Tunney (U.S. Patent No. 5,847,738 assigned to Eastman Kodak Co.) and Tyagi et al. (U.S. Patent No. 5,783,348 assigned to Eastman Kodak Co.) disclose methods of applying a clear, scratch-resistant, lightfast, toner coating onto images. Malhotra describes photocopied color images created by first, depositing color toner images on a charge retentive surface; second, depositing a clear polymer toner material onto the charge retentive surface; and third, transferring and fusing the color toner images and clear polymer toner material onto a substrate. Tutt & Tunney describe a process of depositing and fusing a clear polymer toner on inkjet images. Tyagi et al. describes a similar process for coating clear toner over silver halide images.

Similar electrostatic coating methods are also commonly used in the commercial painting industry to powder coat products, parts, or assemblies. One powder coating method charges a powdered paint using an air gun outfitted with an electrode before spraying the charged paint onto an electrically grounded object. Alternatively, an electrically grounded object may be immersed in a charged, fluidized bed of paint particles (typically referred to as "fluidized bed powder coating").

Another Malhotra patent (U.S. Patent No. 5,906,905 assigned to Xerox) discloses a method of creating photographic quality prints using imaging such as xerography or ink jet by, first, reverse reading toner images on a transparent substrate and then adhering the transparent substrate to a coated backing sheet, coated with a polymeric lightfastness material.

The application of thermal film material on a thermally printed substrate is also disclosed. Nagashima (U.S. Patent No. 4,738,555 assigned to Toshiba) discloses the use of a thermal print bar to thermally transfer a transparent protective layer of wax, vinyl chloride, vinyl acetate, acrylic resin, styrene or epoxy onto the thermally printed medium substrate.

Tang et al. (U.S. Patent No. 5,555,011 assigned to Eastman Kodak) discloses a means to ensure that a thermal film that is being applied to a thermally printed surface has a clean break at the edge of the transfer. It describes a thermal film transfer method having a transport system which moves a dye-donor web and a receiver medium (i) in a forward direction along their respective paths past a thermal head, so that heat from the thermal head causes an area of the thermal film material coating between leading and trailing edges to transfer from the dye-donor web to the receiver medium and (ii) in a reverse direction along their respective paths such that the area of the thermal film material which is transferred to the receiver medium breaks cleanly at the trailing edge from a non-transferred area of the thermal film material that remains on the dye-donor web as the web support separates from the medium.

Abe et al. (U.S. Patent No. 5,954,906 assigned to Canon) discloses a method for protecting and covering a printed material on a substrate with a pressure-sensitive transferring protective covering material with at least (a) a first flexible substrate, (b) an adhesive layer, (c) a solid resin layer, and (d) a second flexible substrate, stacked in this order.

The packaging, printing, and decorating industry uses colored ribbons, known as thermal transfer foils, hot stamping foils, roll foils, and transfer printing foils, for marking or decorating. This market uses solid fill colored ribbons or uniquely patterned ribbons to emboss lettering, patterns, barcodes, or insignias on wood, paper, leather, plastic, fabric, or metal parts. Examples include holograms on credit cards, metalized insignias on baseball cards, corporate logos on business cards, or colored or metalized designs on greeting cards. The hot stamp foiling process involves the transfer of the coatings from a carrier ribbon onto a substrate via a combination of heat and pressure.

### SUMMARY OF THE INVENTION

The present invention relates to a method of applying a protective overcoat to a surface of a digitally readable disc to create a digitally readable disc with a protective overcoat, comprising: applying heat and pressure to a donor web having a carrier side comprising carrier ribbon material and a transfer side comprising protective overcoat material, wherein the heat and pressure facilitate release of a section of the transfer side from adhering to the carrier side of the donor web and facilitate transfer of the section of the transfer side to adhering to the surface of the digitally readable disc.

The present invention also relates to an overcoat for a digitally readable disc and the digitally readable disc itself to which the overcoat is applied, the overcoat on the digitally readable disc being made by the above-described method.

The present invention also relates to a donor web providing a protective overcoat to a digitally readable disc, the donor web having:
a) a carrier side comprising a carrier ribbon material and a lubricant layer as an exterior layer preventing wear of a surface of a heating element or pressing element, the surface coming in contact with the carrier side of the donor web;
b) a transfer side comprising a protective overcoat material, a release layer as an interior layer adjacent to the carrier side, the release layer facilitating release of the transfer side from the carrier side; and an adhesive layer as an exterior layer of the transfer side, the adhesive layer enhancing adhering of a section of the transfer side to form the protective overcoat on the digitally readable disc.

The present invention also relates to an apparatus comprising a donor web having a carrier side comprising carrier ribbon material and a transfer side comprising protective overcoat material, and a means of applying a protective overcoat to at least one surface of a digitally readable disc, by applying heat and pressure to the donor web, wherein the heat and pressure facilitate release of a section of the transfer side from adhering to the carrier side of the donor web and facilitate transfer of the section of the transfer side to adhering to the at least one surface of the digitally readable disc.

### BRIEF DESCRIPTION OF THE DRAWINGS

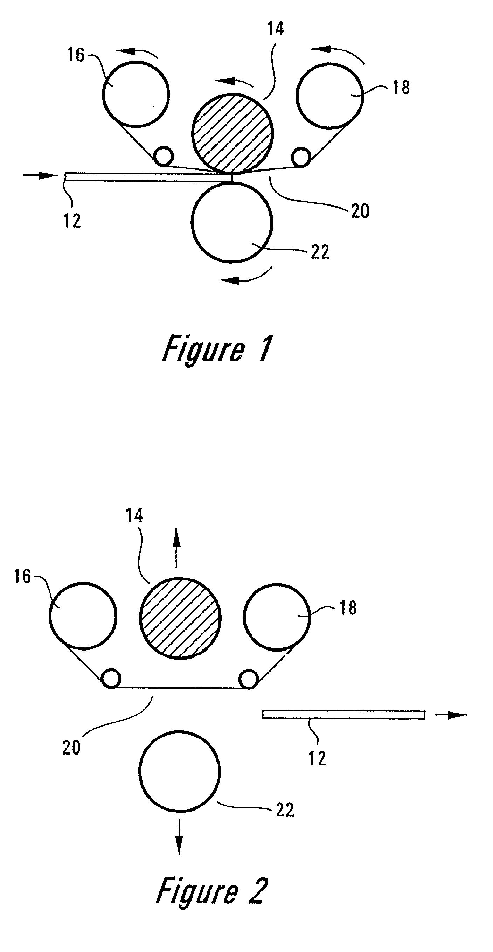

FIG. 1 is a schematic view of a preferred embodiment of the apparatus of the present invention during application of a protective overcoat onto the digitally readable disc (12), showing a digitally readable disc (12), a heat roll (14), a pressure roll (22), a foil source roll (16) a carrier take-up roll (18), and a tensioned section of the donor web (20), the tensioned section being heated and pressed between the heat roll (14) and the pressure roll (22) onto the digitally readable disc (12).

FIG. 2 is a schematic view of the apparatus of FIG. 1 after application of a protective overcoat onto the digitally readable disc (12) with the heat roll (14) and the pressure roll (22) positioned away from the tensioned section of the donor web (18) and the digitally readable disc (12) having already passed the tensioned section of the donor web (18).

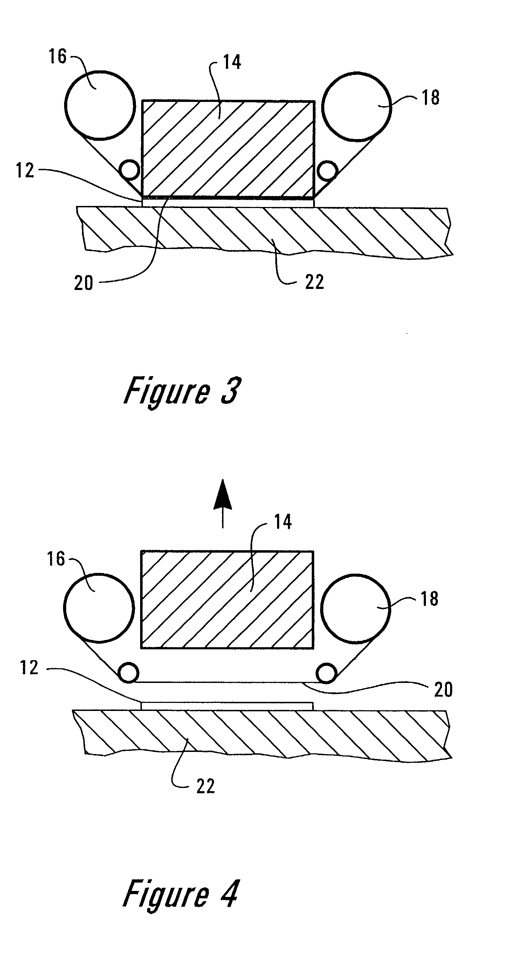

FIG. 3 is a schematic view of another preferred embodiment of the apparatus of the present invention during application of a protective overcoat onto the digitally readable disc (12), showing a digitally readable disc (12), a heat die (14), a base (22), a foil source roll (16) a carrier take-up roll (18), and a tensioned section of the donor web (20), the tensioned section being heated and pressed between the heat die (14) and the base (22) onto the digitally readable disc (12).

FIG. 4 is a schematic view of the apparatus of FIG. 2 after application of a protective overcoat onto the digitally readable disc (12) with the heat die (14) positioned away from the tensioned section of the donor web (18) and the digitally readable disc (12) having already passed the tensioned section of the donor web (18).

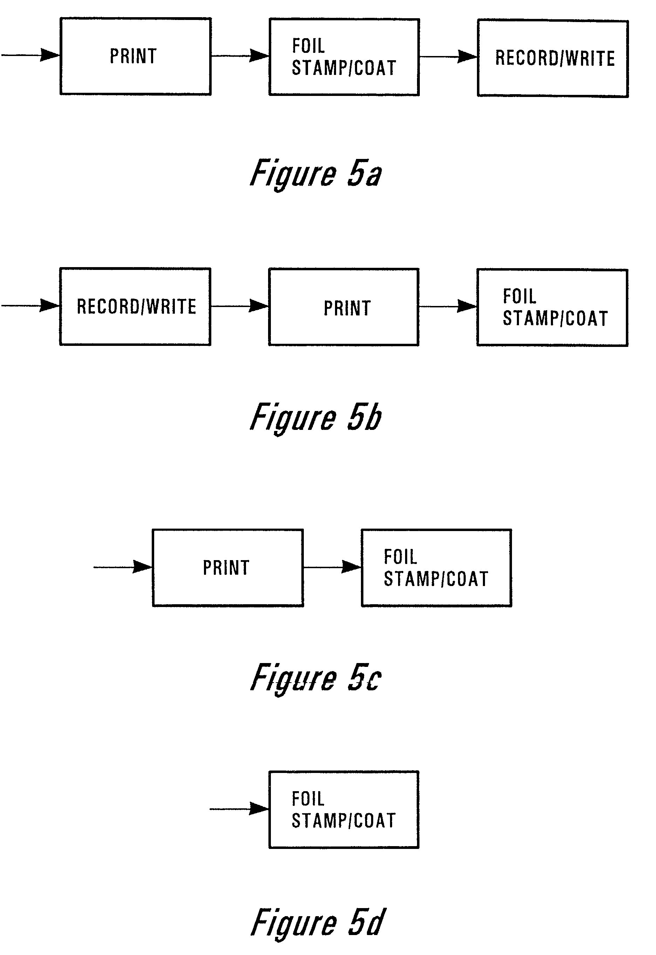

FIG. 5 is a schematic view of several digitally readable disc layout options in the present invention: (a) printing onto the disc, coating the disc, recording onto the disc; (b) recording onto the disc, printing onto the disc, overcoating the disc; (c) printing onto the disc, overcoating the disc; (d) overcoating the disc

### DETAILED DESCRIPTION OF THE PREFERRED EMBODIMENT

The present invention provides a means of creating inexpensive, durable overcoatings for the label bearing side of a digitally readable disk that can compete or improve upon the quality and durability of currently-used printing and/or imaging methods. The label images can be produced, in a non-limiting embodiment, by digital printing devices such as inkjet printers generally using water-based inks. This invention uses a thermally-transferred, transparent overcoat material, which is applied as a clear transparent film, to protect the image printed on the digitally readable disk.

The overcoats and media of the present invention are obtained by transferring thermal transfer material from a donor web which has a top side of carrier ribbon material, the carrier ribbon material anchoring the bottom side which has at least one layer of thermal transfer material. As the donor web is heated and pressed into contact with the printable surface of a digitally printable disc, the thermal transfer material is transferred onto the printable surface.

The printing processes of the present invention can include, but are not limited to inks conventionally used in inkjet, offset, and gravure. In addition, it includes the imaging means used in liquid electrophotography, electrophotography, and conventional photography. When inkjet printing is used, for example, both dye based and pigment based inkjet inks can be used, but the invention is not limited to such inks.

The clear thermal transfer overcoat film of the present invention improves image quality and increases durability of the images. For example, the overcoat film provides good protection against various substances that might spill, either in the form of liquid or dry spills, on the surface of a print. Non-limiting examples of substances which the present invention would protect against would be water, alcohol, ink, coffee, soda, ammonia based or other cleaning liquids, food stains (e.g. mustard, chocolate, berry), and dirt.

The clear, thermal transfer overcoat film can be applied in a way that provides, for example, a gloss finish or a matte finish. This may be achieved through the control of the application temperature, pressure, and speed. In addition, the creation of patterns using a thermal bar as the heating element can be used to create unique matte or patterned finishes.

The composition of the overcoat film can also be formulated to target specific properties. It can be formulated to achieve a specific gloss or matte level, and to enhance the gloss uniformity or the matte uniformity. The thermal transfer material can also be formulated with materials or additives which improve the printed image, specifically, indoor light fade resistance, UV light fade resistance, resistance to water and other liquids, vapor resistance, scratch resistance and blocking resistance. In a preferred embodiment, the thermal transfer material composition can also be formulated to have a colorless or color-tinted appearance, provide a flexible, conformable coating, decrease the required dry time, optimize the adhesion of the thermal transfer film to the digitally readable disc, optimize the release of the thermal transfer overcoat from the donor web, and minimize the adhesion of the thermal transfer overcoat to the base.

In addition, within the carrier ribbon material and the thermal transfer material, there can also be layers that enhance the transfer of the thermal transfer material to the printable surface of the digitally readable disc. These additional layers can include, for example, an adhesive layer positioned as the exterior layer of the thermal transfer material. The primary function of this adhesive layer is to enhance the fixation of the thermal transfer material onto the printable surface of the digitally readable disc. Another example is a release layer positioned on the interior surface of the thermal transfer material next to the interior surface of the carrier ribbon material. The adhesive layer and the release layer can also include additives which enhance indoor and UV lightfade resistance, resistance to water and other liquids, vapor resistance, scratch resistance and blocking resistance in the printed images on the printable surface.

The thermal transfer materials should be flexible. Materials should be selected such that the final film conforms to the surface of the digitally readable disc. During application, the material should not crack or break, thereby leaving blemishes, image degradations, or exposed medium.

Non-limiting examples of light resisting additives that can be added to the thermal transfer material to be transferred to the printable surface of the digitally readable disc in the form of a clear overcoating are the hindered amine series light stabilizers. The hindered amine series light stabilizer can include commercially available hindered amine series light stabilizers having a property of dispersing within a region which it can react with a dye molecule and deactivate an active species. Preferable specific examples of such hindered amine series light stabilizers include TINUVIN 292, TINUVIN 123, and TINUVIN 144 (trademarks, produced by Japan Ciba-Geigy Company).

Besides the hindered amine series light stabilizers, the thermal materials can also include UV absorbers, which can include, but are not limited to, the benzophenone series UV absorbers, benzotriazole series UV absorbers, acetanilide series UV absorbers, cyanoacrylate series UV absorbers, and triazine series UV absorbers. Specific preferred examples are commercially available acetanilide series UV absorbers such as Sanduvor UVS powder and Sanduvor 3206 Liquid (trademark names, produced by Sando Kabushiki Kaisha); and commercially available benzotriazole series UV absorbers such as TINUVIN 328, TINUVIN 900, TINUVIN 1130, and TINUVIN 384 (trademark names, produced by Japan Ciba-Geigy Company), and Sanduvor 3041 Dispersion (trademark name, produced by Sando Kabushiki Kaisha).

Non-limiting examples of liquid resistance additives or vapor resistance additives which can be added to the thermal transfer material layers, to be transferred to the printable surface of the digitally readable disc in the form of a clear overcoating are additives that decrease the wetability of the surface by decreasing the surface energy, thereby repelling liquids such as (but not limited to) water from the surface. These additives may include the family of fluoro-surfactants, silanes, siloxanes, organosiloxanes, siliconizing agents, and waxes or combinations thereof.

In addition to the use of additives to increase the liquid or vapor resistance, the formulation of the layers can provide improvements. Individual thin layers may develop pits or pin holes in their surface during their coating to the carrier. These holes provide avenues for liquid or vapor to travel down to the printed surface. By increasing the number of layers used to create the final overcoat, the probability of a pinhole extending all the way through the entire layer stack is decreased. In addition, this allows the individual layers to be optimized for a unique performance attribute, whereas it may not be possible to acquire as large a range of attributes from a single layer. For example, an upper layer may be optimized for gloss, and it may cover a lower layer optimized for light fade resistance. The combination of the two may be the same thickness as a single layer that has lower gloss and inferior light fade and liquid resistant properties due to the tradeoffs associated with formulating that single layer.

The present invention makes possible very thin individual layers on a digitally readable disc that can be applied either as transparent or opaque layers. Thus, in one embodiment of the invention it is possible to apply thin protective layers as both undercoating and overcoating to a digitally readable disc, achieving durability and protection of print qualities without sacrificing good optical or media qualities in the finished product.

One of the layers in the coating may consist of material having barrier properties (i.e., having very low permeability toward gases (e.g., oxygen or water vapor)). Examples of the most widely used materials with barrier properties are co-polymers of acrylonitrile or co-polymers of vinylidene chloride or vinylidene fluoride. Use of materials with barrier properties in the overcoat makes it possible to dramatically increase protection of the overcoated print from humidity and fade (partially caused by oxidation of the colorants.

The digitally readable disc may also include or be coated with materials which increase adhesion of inkjet dyes or pigments, increase adhesion of the overcoat material, optimize image quality, increase resistance to scratches, increase resistance to fading, increase resistance to moisture, or increase resistance to UV light. Such materials include, but are not limited to polyesters, polystyrenes, polystyrene-acrylic, polymethyl methacrylate, polyvinyl acetate, polyolefins, poly(vinylethylene-co-acetate), polyethylene-co-acrylics, amorphous polypropylene and copolymers and graft copolymers of polypropylene.

The digitally readable disc material typically comprises a circular disc having both a printable surface and recordable surfaces , though the shape of the medium is not limited in any way and the size and thickness of the medium may vary.

One of ordinary skill in the art will understand that an image can be applied to a printable surface of the digitally readable disc using commonly known and available means, such as inkjet or electrostatic printing.

If inkjet printing is used, excess moisture from the inks may impede adhesion or uniform dispersion of the overcoat on the printed surface.. As long as the media is dry enough for proper adhesion, moisture may dissipate through the overcoat surface over time, since the overcoat is so thin. If excess moisture is trapped between the digitally readable print material and the overcoat, the printed image may bloom or blur at its edges. In a preferred embodiment of the present invention, an optimum combination of ink, digitally readable disc and thermal transfer overcoat is achieved which minimizes excess moisture in the printing process, thus avoiding accumulations of condensed liquid on the medium. Alternatively, to eliminate such excess moisture, the image may be dried.

An optional dryer can be used to ensure the ink is dry enough to facilitate coating adhesion before overcoating. As non-limiting examples, the dryer can dry the wet image using convection, conduction or irradiation (for example, in a preferred embodiment, with any of the following: a radiative heating apparatus, a conductive heating apparatus, a convective blowing apparatus, an infrared apparatus, an infrared radiative heating element, an ultraviolet apparatus and a microwave apparatus). As long as the media is dry enough for proper adhesion, excess moisture may dissipate through the overcoat surface over time, since the overcoat is so thin.

The image may also be preheated prior to coating, to facilitate the transfer of the overcoat material. If a dryer is used, the drying step may provide this preheating.

In a preferred embodiment of the present invention, the heating element used for transfer is selected from a group consisting of a heated roller, a ceramic heat bar, a heat die or a thermal printhead. A heated roller, similar to what is used in most commercial laminators or many electrophotograpic printers, provides a good means of providing uniform, continuous, full width transfer of the overcoat. A ceramic heat bar, similar to what is used in many monochrome electrophographic printers (a.k.a. instant-on fusers), also provides a good means of providing uniform, continuous, full width transfer of the overcoat. In addition, ceramic elements have a lower thermal mass than a typical heated roller, thus they quickly reach the desired transfer temperature and quickly cool following transfer, thereby enhancing energy efficiency and reducing start-up time. A thermal printhead or heat die, similar to what is used in thermal transfer, dye sublimation printers or faxes, provides a good means of providing continuous or intermittent, full width or discrete, transfer of the overcoat. The heating element can be rigid, or it may be compressible, with the compression level influencing the nip area.

In another preferred embodiment of the present invention, the medium is positioned over a base, and the heating element and base are pressed towards each other to create a nip area. The base can be rigid, or it can be compressible, with the compression level influencing the nip area. The base may be coated with a non-stick (non-wetting), heat-resistant surface. A solid lubricant can be used to provide this surface. The solid lubricant may be a fluororesin, fluorocarbon, or fluoropolymer coating such as (poly)-tetrafluoroethylene (PTFE), perfluoroalkoxy (PFA), fluorinated ethylene propylene (FEP), ethylene tetrafluoroethylene (ETFE), ethylene chlorotrifluoroethylene (ECTFE), polyvinylidene fluoride (PVDF), with trade names such as Teflon, Silverstone, Fluoroshield Magna, Cerm-a-lon, Magna TR, Navalon, Apticote, or Edlon. In addition a replenished liquid lubricant, such as silicone oil, can be used to provide this non-stick surface.

In a preferred embodiment of the present invention, the heating element, the base (or pressure element) and the donor web span beyond the width of the printable surface of the digitally readable disc to be coated. During application, the heating element and base maintain a constant nip force and area across the donor web, which is in contact with the digitally readable disc. Since the donor web and nip area extend beyond the print sides, full coating to all print edges is insured. The non-stick base surface ensures that the overcoat is only transferred to the printable surface and not to the surrounding non-stick surface of the base. Only that portion of the thermal transfer overcoat that touches the printable surface separates from the donor web. The rest, including the thermal transfer material overcoat portion extending beyond the edges, remains connected to the donor web. The present design also provides the added feature in that one source of overcoat can be used to coat any print size narrower than the source, without the need for post process trimming.

When not being applied, the heating element may be removed from the donor web and base surfaces, thereby discontinuing transfer and allowing feed of the digitally readable disc under and away from the heater element. Also, application of the coating can be discontinued by reducing the temperature of the heating element or by reducing the nip force, which can be facilitated by raising the heating element or the combination of the heating element and donor web off the digitally readable disc surface

In addition to limiting the area of transfer of the thermal transfer overcoat to the printable surface of the digitally readable disc by providing a non-stick surface on the base or roller under the printable surface, the area of the printable surface that actually receives a transferred section of the thermal transfer overcoat can be further limited to a specific portion of the printable surface by limiting the section of the thermal transfer overcoat to the area in which heat and pressure is applied. This can be accomplished with the use of a thermal printhead, as used in thermal transfer printers. For example, selected printed areas, such as colored images, on the printable surface can be overcoated while other printed areas, such as black and white text, can remain uncoated. Such an embodiment is shown in Fig. 3. Such selective overcoating of discrete areas on digitally printable discs is not feasible with traditional laminates and traditional laminating processes nor other digital coating processes.

Also in a preferred embodiment of the present invention, the speed of the donor web through the heating element is maintained at the same speed as the digitally readable disc, thus ensuring a uniform coverage. A source roll of donor web is located upstream of the heating element and a take-up roll is located downstream. The source roll is torque limited with a slip clutch or similar device to tension and present the thermal transfer material on the donor web, and to allow the unrolling of the donor web concurrent with the digitally readable disc during application but ensuring that uncontrolled unrolling does not occur. The take-up roll provides enough torque to peel the donor web from the coated disc's surface, but not enough to pull the donor web/ disc combination through the applicator or to distort the coating in the applicator. The take-up mechanism thus peels the donor web from the coated medium, collects the donor web, and helps maintain the uniform tension on the donor web during application.

Assuming the printed image on the digitally readable disc can be dried quickly enough through ink and media optimization or post print dryers, a thermal transfer overcoat module can be offered to use, for example, as a plug-in module for an apparatus that prints on the surface of digitally readable discs such as CD's. An inkjet printer in combination with a thermal transfer overcoat module would provide a compact reliable system for creating durable photo-quality prints. Alternatively, rather than having the thermal transfer overcoating capability offered as part of a plug-in module which can either be included or not included with the printer, a printer can be built which completely incorporates the thermal transfer overcoating function into an integrated printing and coating printer. Alternatively, a stand-alone coater can be used, which allows the user to hand load the already printed digitally readable discs to be overcoated.

Covering the image with a thermal transfer material overcoat offers the advantage of providing an intimate, gap-free bond with the digitally readable disc, thus protecting the image from the outside environment.

Thermal transfer overcoating is an improvement over lamination as previously disclosed. In the present invention a thermal transfer material overcoat is transferred onto the digitally readable disc surface only at the locations that are subjected to the contact pressure and heat. Thus, it disengages from the donor web as it transfers and only the thermal transfer material and not the donor web is attached to the disc surface. There is clean separation of the donor web and the disc material at all edges of the print. In contrast, in previously disclosed laminates, the transferred laminate is still attached to the overcoat supply source, until separated by a manual or automated trimming step. In the present invention, there is no need for a secondary manual or automated trimming step to disconnect the thermal overcoat supply source (the donor web) from the overcoated disc. This also facilitates the easy feeding of digitally readable discs.

Prints embodied in the present invention can be produced by a variety of apparatuses. Such apparatuses typically comprise the elements illustrated in FIGS. 1 and 3, though it will be appreciated that other apparatuses may be employed without departing from the scope and true spirit of the present invention.

As shown in FIG. 1, once a digitally readable disc (12) is loaded into the system, the take up roll (18), or other similar means, tensions a section (20) of the donor web coming from the source roll (16), and at least one heating element roll (14) heats the segment of the donor web and presses it against the medium positioned on a base (22) (which in this embodiment is in the form of a pressure roller) to transfer a segment of the thermal transfer material layer of the donor web onto the digitally readable disc (12) as it moves through the system. As shown in Figure 2, at the end of the coating of the digitally readable disc, the heating element (14) or other similar means is raised and the pressing element (22) is lowered so that they no longer provide heat and pressure to the donor web. The thermal transfer film layer separates from the donor web during transfer up to the edges of the digitally readable disc, with the thermal transfer material layer adhering to the surface of the disc where the pressure and heat were applied and continuing to be attached to the donor web beyond the edges of the disc.

FIG. 2 shows the apparatus of FIG. 1 with the ribbon handler tensioning the donor web in a position away from and no longer abutting the heater and base as the digitally readable disc moves through the system. In this position, no thermal transfer material layer transfers onto the disc as it moves through the system, and no material is collected in the take-up roll.

As shown in FIG. 3 once a digitally readable disc (12) is loaded into the system, the take up roll (18), or other similar means, tensions a section (20) of the donor web coming from the source roll (16), and at least one heating element die (14) heats the segment of the donor web and presses it against the medium positioned on a base (22) (which in this embodiment is in the form of a platen) to transfer a segment of the thermal transfer material layer of the donor web onto the digitally readable disc (12) as it moves through the system. As shown in Figure 4, at the end of the coating of the digitally readable disc, the heating die (14) or other similar means is raised above the platen (22) so that the combination of the two no longer provides heat and pressure to the donor web. The thermal transfer film layer separates from the donor web during transfer up to the edges of the digitally readable disc, with the thermal transfer material layer adhering to the surface of the disc where the pressure and heat were applied and continuing to be attached to the donor web beyond the edges of the disc.

FIG. 4 shows the apparatus of FIG. 3 with the ribbon handler tensioning the donor web in a position away from and no longer abutting the heating die and base as the digitally readable disc moves through the system In this position, no thermal transfer material layer transfers onto the disc as it moves through the system, and no material is collected in the take-up roll.

The protective overcoat of the present invention can be applied to a digitally readable disc in various ways. FIG. 5 shows a schematic view of several digitally readable disc layout options in the present invention: (a) printing onto the disc, coating the disc, recording onto the disc; (b) recording onto the disc, printing onto the disc, overcoating the disc; (c) printing onto the disc, overcoating the disc; (d) overcoating the disc

While the foregoing invention has been described in some detail for purposes of clarity and understanding, it will be clear to one skilled in the art from the reading of this disclosure that various changes in form and detail can be made without departing from the true scope of the invention.

## Claims

1. A donor web providing a protective overcoat to a digitally readable disc, the donor web having:
a) a carrier side comprising a carrier ribbon layer and a lubricant layer as an exterior layer preventing wear of a surface of a heating element or pressing element, the surface coming in contact with the carrier side of the donor web;
b) a transfer side comprising a protective overcoat material, a release layer as an interior layer adjacent to the carrier side, the release layer facilitating release of the transfer side from the carrier side; and an adhesive layer as an exterior layer of the transfer side, the adhesive layer enhancing adhering of a section of the transfer side to form the protective overcoat on the digitally readable disc.

2. The donor web of claim 1, wherein there is more than one layer of protective overcoat material in the transfer side.

3. The donor web of claim 2, wherein at least one of the layers of protective overcoat material comprises a barrier material.

4. An apparatus comprising
a donor web having a carrier side comprising carrier ribbon material and a transfer side comprising protective overcoat material,
a means of applying a protective overcoat to at least one surface of a digitally readable disc, by applying heat and pressure to the donor web, wherein the heat and pressure facilitate release of a section of the transfer side from adhering to the carrier side of the donor web and facilitate transfer of the section of the transfer side to adhering to the surface of the digitally readable disc.

5. The apparatus of claim 4, wherein the surface is a printable surface.

6. The apparatus of claim 5, wherein the printable surface comprises at least one printed image.

7. The apparatus of claim 4 further comprising:
a means of positioning the section of the transfer side against the surface of the digitally readable disc, while heat and pressure are applied to the donor web; and
a base to support the digitally readable disc while the section of the transfer side is being positioned against the surface of the digitally readable disc.

8. The apparatus of claim 4, wherein heat is applied to the section of the transfer side by a heating element applied to the carrier side of the donor web.

9. The apparatus of claim 8, wherein pressure is applied to the section of the transfer side by controlled contact between the heating element and the base, with the donor web and the digitally readable disc sandwiched between the heating element and the base.

10. The apparatus of claim 4, wherein pressure is applied to the section of the transfer side by controlled contact between a pressing element applied to a section of the carrier side of the donor web adjacent to the section of the transfer side, the donor web and the digitally readable disc being sandwiched between the pressing element and the base.

11. The apparatus of claim 10, wherein the pressing element comprises at least one roller element.

12. The apparatus of claim 4, wherein at least a portion of an exterior surface of the base comprises a surface material resistant to adhering to the section of the transfer side .

13. The apparatus of claim 12, wherein the surface material is selected from the group consisting of a fluororesin coating, a fluorocarbon coating, and a fluoropolymer coating.

14. The apparatus of claim 12, wherein the surface material is selected from the group consisting of (poly)-tetrafluoroethylene (PTFE), perfluoroalkoxy (PFA), fluorinated ethylene propylene (FEP), ethylene tetrafluoroethylene (ETFE), ethylene chlorotrifluoroethylene (ECTFE), polyvinylidene fluoride (PVDF), their derivatives and combinations thereof.

15. The apparatus of claim 12, wherein the surface material is silicone oil.

16. The apparatus of claim 4, wherein heat is applied to only a subsection of the section of the transfer side, so that only the subsection to which heat is applied adheres to the surface of the digitally readable disc.

17. The apparatus of claim 4, wherein pressure is applied to only a subsection of the section of the transfer side, so that only the subsection to which the pressure is applied adheres to the surface of the digitally readable disc.

18. The apparatus of claim 4, wherein the section of the transfer side has at least one of a surface width greater than the surface's surface width and a surface length greater than the surface's surface length, so that only a subsection of the section adheres to the surface, the subsection having a surface width equal to or less than the surface's surface width and a surface length equal to or less than the surface's surface length.

19. The apparatus of claim 4, wherein the base comprises at least one roller.

20. The apparatus of claim 4, wherein the base comprises a platen.

21. The apparatus of claim 4, wherein the transfer side of the donor web comprises more than one layer.

22. The apparatus of claim 4, wherein the at least one layer of the transfer side comprises thermoplastic resin material.

23. The apparatus in claim 4, wherein the apparatus further comprises a printer component, the printer component applying a printed image to the surface of the digitally readable disc before the section of the transfer side is transferred to adhering to the surface of the digitally readable disc.

24. The apparatus in claim 4, wherein the section of the transfer side is transferred to adhering to the surface of the digitally readable disc, the surface having a printed image already applied by a printer separate from the apparatus.

25. The apparatus in claim 4, wherein the apparatus is a module installable as a component of a separate printer.

26. The apparatus in claim 22, wherein the thermoplastic resin material is selected from the group consisting of acrylic, polyolefin, polyester, their derivatives and combinations thereof.

27. The apparatus of claim 21, wherein at least one layer of the transfer side comprises a barrier layer resistant to penetration by liquid and air.

28. The apparatus of claim 27, wherein the barrier layer comprises a polymeric material selected from the group consisting of polyvinylidene chloride, polyvinylidene fluoride, their derivatives and combinations thereof.

29. The apparatus of claim 4, wherein the carrier side of the donor web comprises more than one layer.

30. The apparatus in claim 29, wherein at least one layer of the carrier side is selected from the group consisting of thermoplastic resin material and high-density tissue.

31. The apparatus in claim 30, wherein the thermoplastic resin material is a polyester.

32. The apparatus in claim 6, wherein the at least one printed image is printed by a printing method selected from the group consisting of inkjet, offset, gravure, liquid electrophotography, electrophotographic imaging, and conventional photographic imaging methods.

33. The apparatus in claim 4, wherein the section of the transfer side transferred to adhering to the surface has a surface finish selected from the group consisting of matte finish and gloss finish.

34. The apparatus in claim 4, wherein the apparatus further comprises a means of stamping at least one textured pattern onto an exterior surface of the section of the transfer side transferred to adhering to the surface of the digitally readable disc.

35. The apparatus in claim 4, wherein the apparatus further comprises a means of heating and pressing at least one textured pattern onto an exterior surface of the section of the transfer side transferred to adhering to the surface of the digitally readable disc.

36. The apparatus of claim 4, wherein the section of the transfer side transferred to adhering onto the surface has improved features selected from the group consisting of matte uniformity and gloss uniformity.

37. The apparatus of claim 4, wherein the section of the transfer side transferred to adhering to the surface improves durability of the surface through addition of at least one of indoor lightfade resistance, ultraviolet light fade resistance, resistance to liquid penetration, resistance to vapor penetration, scratch resistance, and blocking resistance.

38. The apparatus of claim 6, wherein the section of the transfer side transferred to adhering to the surface improves durability and quality of the printed image of the surface through addition of at least one of dry time optimization, optimization of the adhering of the section of the transfer side to the surface of the digitally readable disc, and optimization of release of the section of the transfer side from adhering to the carrier side of the donor web.

39. The apparatus of claim 29, wherein the carrier side of the donor web further comprises a lubricant layer as an exterior layer of the carrier side, the lubricant layer preventing wear of a surface of the heating element coming in contact with the carrier side of the donor web.

40. The apparatus of claim 21, wherein the transfer side of the donor web further comprises a release layer as an interior layer of the transfer side adjacent to the carrier side, the release layer facilitating release of the section of the transfer side from adhering to the carrier side of the donor web.

41. The apparatus of claim 4, wherein the transfer side of the donor web further comprises an adhesive layer as an exterior layer of the transfer side, the adhesive layer enhancing adhering of the section of the transfer side to the surface of the digitally readable disc.

42. The apparatus in claim 8, wherein the heating element is selected from the group consisting of a heated roller, a heated die element, a ceramic heater element, and thermal print-head heating elements.

43. The apparatus in claim 6 further comprising a drying element, the drying element drying the printed image on the surface of the digitally readable disc.

44. The apparatus of claim 4, wherein the surface of the digitally readable disc further comprises a layer that optimizes adhering the section of the transfer side to the surface of the digitally readable disc, the adhering to the surface being strong enough to facilitate release from the adhering of the section of the transfer side to the carrier side of the donor web.

45. The apparatus of claim 6, wherein ink used in the printed image on the surface of the digitally readable disc optimizes adhering the section of the transfer side to the printed image.

46. The apparatus in claim 43, wherein the drying element is selected from the group consisting of a radiative heating apparatus, a conductive heating apparatus, a convective blowing apparatus, an infrared apparatus, an infrared radiative heating element, an ultraviolet apparatus and a microwave apparatus.
